Europäisches Patentamt

European Patent Office

Office européen des brevets

(19)

(11) Numéro de publication : **0 113 622**
**B1**

(12) **FASCICULE DE BREVET EUROPÉEN**

(45) Date de publication du fascicule du brevet :
30.07.86

(21) Numéro de dépôt : 83402424.2

(22) Date de dépôt : 14.12.83

(51) Int. Cl.⁴ : **B 64 G 1/40**

(54) Procédé et dispositif de propulsion pour satellites.

(30) Priorité : 14.12.82 FR 8220953

(43) Date de publication de la demande :
18.07.84 Bulletin 84/29

(45) Mention de la délivrance du brevet :
30.07.86 Bulletin 86/31

(84) Etats contractants désignés :
DE GB IT NL

(56) Documents cités :
Néant

(73) Titulaire : **MATRA**
**4 rue de Presbourg**
**F-75116 Paris (FR)**

(72) Inventeur : **Kerebel, Alain**
**1, Passage Pilatre de Rozier**
**F-78000 Versailles (FR)**

(74) Mandataire : **Fort, Jacques et al**
**CABINET PLASSERAUD 84, rue d'Amsterdam**
**F-75009 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne les procédés et dispositifs de propulsion destinés aux satellites.et elle trouve une application particulièrement importante dans le domaine des satellites géostationnaires.

Pour injecter un satellite sur son orbite définitive puis assurer son maintien à poste pendant la durée de. vie utile, des moyens de propulsion doivent être prévus. Une tendance qui se manifeste actuellement consiste à prévoir un système de propulsion unifié, qui tout à la fois intervient pour injecter le satellite sur son orbite définitive (rôle rempli antérieurement par un moteur d'apogée à poudre) et pour assurer ensuite le maintien à poste du satellite (rôle rempli par des tuyères alimentées à partir d'un système de stockage d'ergol). En règle générale, on utilise deux ergols, par exemple la monométhylhydrazine ou MMH comme combustible, le peroxyde d'azote $N_2O_4$ comme oxydant.

Des raisons d'encombrement et faisabilité conduisent à utiliser au moins deux réservoirs de stockage pour chaque ergol. Dans les dispositifs existants, les réservoirs contenant un même ergol sont reliés en parallèle par un réseau de tuyauteries. L'une des raisons qui conduisent à ce montage en parallèle est la suivante. La majeure partie (en général plus des trois quarts) des ergols est consommée au cours de la phase d'injection. Le montage en parallèle et le vidage simultané des deux réservoirs permettent de maintenir le centre de masse des ergols sur l'axe de poussée du moteur principal.

Mais, en contrepartie, cette disposition présente de nombreux inconvénients. La multiplication des réservoirs augmente le poids et le coût. Les réservoirs doivent pratiquement être redessinés pour chaque mission particulière. Les réservoirs ne sont jamais totalement pleins durant le lancement (et l'éventuel tir de périgée depuis la navette spatiale). Tous les réservoirs commençant à se vider dès le début de l'injection sur orbite définitive, un ballotement du liquide dans les réservoirs est à craindre en dépit du cloisonnement possible de ces derniers.

L'invention vise à fournir un procédé et un dispositif de propulsion à ergols pour satellites répondant mieux que ceux antérieurement connus aux exigences de la pratique, notamment en ce que les inconvénients ci-dessus mentionnés sont très atténués.

Pour cela, l'invention part de la constatation que, quel que soit le mode d'injection du satellite sur son orbite définitive, le satellite est soumis à une accélération d'orientation déterminée et elle fait usage de cette accélération pour assurer le puisage des ergols.

De façon plus précise, l'invention propose un dispositif de propulsion unifié à ergol pour satellites comportant un système de stockage d'ergol ayant au moins deux réservoirs pour l'ergol ou chaque ergol, caractérisé en ce que les réservoirs contenant le même ergol sont montés en série, la contenance du réservoir amont étant inférieure à la consommation d'ergol requise par le moteur d'apogée pour l'injection et ce réservoir amont étant monté de façon que l'accélération au cours de l'injection maintienne l'ergol qu'il contient au contact d'une zone de la paroi munie d'une conduite de sortie d'ergol vers le réservoir placé en aval.

L'invention propose également un procédé de propulsion de satellite par alimentation d'un propulseur d'apogée et de propulseurs de maintien à poste à partir d'un système de stockage d'ergol comprenant au moins deux réservoirs pour l'ergol ou chaque ergol, procédé caractérisé en ce qu'on monte en série les réservoirs contenant un même ergol, en ce qu'on alimente le propulseur d'apogée à partir des réservoirs placés en série en admettant un gaz de pressurisation dans le réservoir amont à partir d'une source de gaz embarquée, et en ce qu'on assure l'alimentation des propulseurs de maintien à poste à partir du réservoir aval après que le réservoir amont ait été vidé par fonctionnement du moteur d'apogée et après séparation des réservoirs amont et aval.

Alors que le réservoir aval doit résister à l'action de l'ergol sous pression qu'il contient pendant toute la durée de vie utile du satellite, le réservoir amont n'est pressurisé et en contact avec l'ergol que pendant une durée brève, ne dépassant pas quelques semaines. Ce réservoir amont peut, en conséquence, être constitué de façon beaucoup plus économique et légère que le réservoir aval, ce qui est une source notable d'économie. Au surplus, le réservoir aval peut être aisément standardisé, le réservoir amont, de constitution simple, étant seul modifié en fonction de la mission.

Contrairement à ce qu'on aurait pu penser, l'invention est susceptible d'être mise en œuvre quel que soit le mode de lancement et d'injection prévu, moyennant un simple choix approprié de l'orientation des réservoirs amont pour tenir compte du sens dans lequel s'exerce l'accélération lors de l'injection. Dans le cas d'un satellite qui est stabilisé suivant trois axes au cours de l'injection, les réservoirs seront orientés de façon que l'accélération uniforme, de sens axial, au cours de l'injection, tende à plaquer l'ergol contre la partie du réservoir munie de la conduite de sortie. Dans le cas où le satellite est stabilisé par rotation autour de son axe longitudinal lors de l'injection (satellites dits « spinnés »), l'accélération centrifuge est prépondérante. Les réservoirs seront placés de façon que cette accélération radiale plaque le liquide contre la partie de. la paroi munie de la conduite de sortie.

L'invention sera mieux comprise à la lecture de la description qui suit de modes particuliers de réalisation, donnés à titre d'exemples non limitatifs. La description se réfère aux dessins qui l'accompagnent, dans lesquels :

la Figure 1 est un schéma de principe montrant le dispositif de propulsion dans son ensemble,

la Figure 2 est un schéma montrant l'implantation des réservoirs autour de l'axe principal du satellite,

la Figure 3 est un schéma montrant l'emplacement de la sortie des réservoirs amont dans un satellite stabilisé par rotation au cours de l'injection,

les Figures 4 et 5 montrent schématiquement une constitution interne possible des réservoirs aval,

les Figures 6a à 6f montrent la disposition des ergols dans leurs réservoirs à plusieurs phases de la mission,

la Figure 7 montre schématiquement la partie supérieure d'un réservoir amont réduisant le ballotement d'ergol,

la Figure 8 est un schéma d'implantation des réservoirs utilisable quel que soit le mode de lancement du satellite,

la Figure 9 est une vue de détail à grande échelle des réservoirs supplémentaires du dispositif de la figure 8,

les Figures 10, 11 et 12 montrent schématiquement un dispositif à six réservoirs.

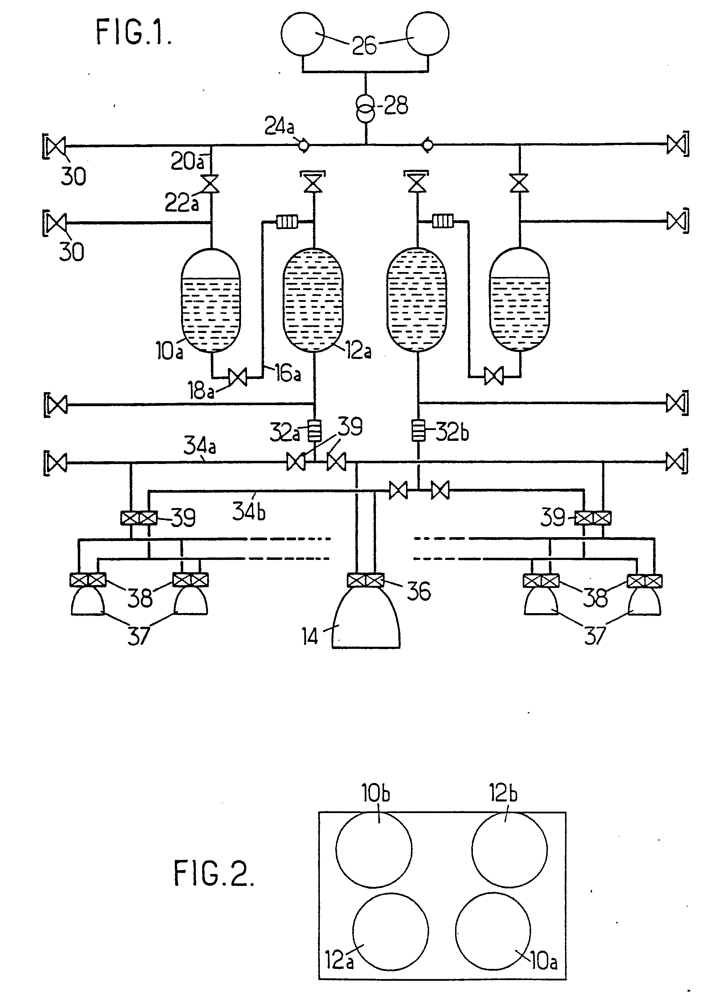

Le dispositif dont la constitution de principe est montrée en figure 1 utilise deux ergols, qu'on supposera être le peroxyde d'azote $N_2O_4$ et la monométhyle hydrazine ou MMH. Les circuits parcourus par les deux ergols sont de constitution identique. Le circuit destiné à recevoir la MMH comporte par exemple un réservoir amont 10a et un réservoir aval 12a. Le réservoir amont 10a ne sera en contact avec l'ergol que pendant les quelques jours ou quelques semaines qui séparent le remplissage de la vidange au cours du transfert, c'est-à-dire lors de l'alimentation du moteur d'apogée. Il pourra être constitué de façon légère, par exemple par une paroi mince de métal compatible avec l'ergol et formable à froid, tel qu'un alliage d'aluminium ou de titane, fretté par un bobinage de fibre enrobée de résine. Il serait impossible d'utiliser un tel réservoir pour le stockage à long terme à cause du risque de corrosion, et surtout à cause du risque de fluage de la résine d'imprégnation de l'enroulement de renforcement sous l'action de la pression interne que la tôle métallique mince du réservoir est incapable de supporter. Le réservoir aval 12a aura au contraire une constitution classique, à enveloppe de titane allié, et sera équipé d'un dispositif d'expulsion de l'ergol mettant en jeu les forces de capillarité, pour fournir un débit d'ergol exempt de bulles de gaz.

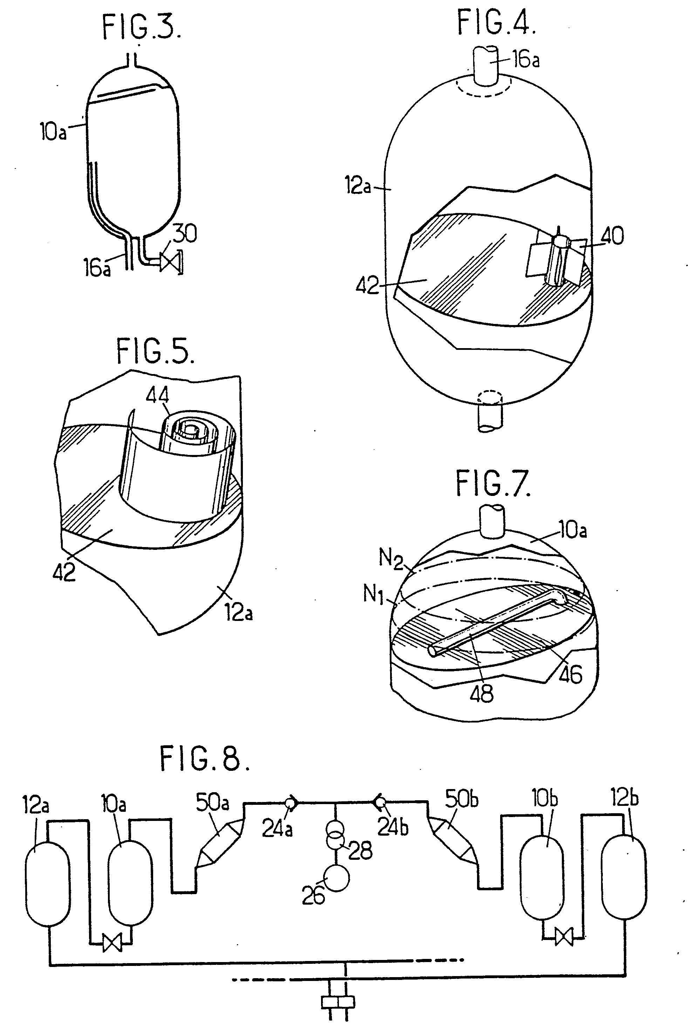

La sortie du réservoir 10a est placée de façon à être noyée par l'ergol résiduel en fin de vidange de ce réservoir. Dans le cas d'un transfert sur orbite définitive alors que le satellite est stabilisé suivant trois axes, la sortie sera située dans une direction axiale (direction de la poussée du propulseur d'apogée 14). La sortie du réservoir 10a est reliée au réservoir 12a par une conduite 16a munie d'une vanne d'isolement 18a. On utilisera généralement une vanne pyrotechnique ouverte avant actionnement, qui a l'avantage d'être légère et d'assurer une coupure étanche. Dans le cas d'un satellite stabilisé par rotation, cette conduite 16a pourra se prolonger jusqu'à la zone externe dans le sens radial du volume délimité par le réservoir (figure 3).

Une entrée axiale du réservoir 10a, située à l'opposé de la sortie, est reliée par une conduite 20a munie d'une vanne 22a d'isolement et de moyens anti-retour 24a, à une source d'hélium sous pression. La vanne 22a peut être une vanne pyrotechnique fermée jusqu'à actionnement. La source de gaz de pressurisation peut être constituée par des bouteilles d'hélium sous pression 26 et un détendeur-régulateur 28 réduisant la pression jusqu'à la valeur de pressurisation choisie, par exemple de l'ordre de 18 bars. Ce circuit est complété par des vannes de remplissage et de vidange au sol montrées schématiquement en 30, par des capteurs de pression (non représentés) et par l'une des soupapes de sécurité (non représentées). Une vanne de dépressurisation du réservoir 10a sera avantageusement prévue pour réduire la pression dans le réservoir une fois qu'il est isolé, afin d'éviter un risque d'éclatement et de pollution de l'ensemble du satellite. L'échappement de cette vanne doit s'effectuer de façon symétrique pour éviter de créer des forces ou couples écartant le satellite de sa position nominale.

Lorsque les deux ergols ont des masses volumiques différentes, ce qui est le cas le plus fréquent, les réservoirs doivent être implantés non pas à intervalles réguliers, mais en des emplacements qui maintiennent un équilibrage satisfaisant au cours de la vidange. La figure 2 montre à titre d'exemple une disposition utilisable lorsque les ergols sont la monométhylhydrazine et $N_2O_4$, pour lesquels le rapport des masses volumiques est de 1,64 à 20 °C.

Les réservoirs 12a et 12b alimentent, par l'intermédiaire de filtres 32a et 32b, des collecteurs respectifs 34a et 34b. Sur ces collecteurs sont branchés, d'une part, le moteur d'apogée 14 muni d'une vanne de commande électromagnétique 36, d'autre part, les diverses tuyères 37, également munies d'électrovannes 38 permettant de les alimenter à partir de l'un ou l'autre des collecteurs. Des vannes d'isolement bistables 39 sont prévues sur les collecteurs pour permettre de séparer un jeu de tuyères 37 de l'alimentation en cas de défaillance. Les tuyères sont avantageusement en nombre suffisant pour assurer la redondance nécessaire à la sécurité d'emploi.

Un dispositif anti-retour est placé entre les réservoirs pour éviter le retour d'ergol vers le réservoir amont 10a une fois celui-ci épuisé, alors que la vanne 18a n'a pas encore été fermée. Ce dispositif peut être placé dans la conduite de liaison 16a. Toutefois, il peut être intégré au réservoir aval et être constitué par le filtre qui est de toute façon nécessaire, par exemple sous forme d'une toile filtrante à mailles fines (de l'ordre de 10 μ) placée à l'entrée du réservoir.

Le réservoir aval 12a peut avoir la constitution interne classique des réservoirs antérieurs à tension de surface permettant une vidange complète. Ces réservoirs sont équipés intérieurement d'un dispositif dirigeant, par capillarité, l'ergol vers la sortie. Une solution plus avantageuse utilise le fait qu'à la fin du fonctionnement du moteur d'apogée le réservoir 10a est partiellement (habituellement aux deux tiers) vide. Cette solution consiste à fractionner le réservoir 12a en deux volumes par une cloison, oblique pour permettre une vidange complète, munie d'un passage situé au point bas et munie d'une toile métallique de retenue ou d'un dispositif tampon à capillarité. La cloison 42 sépare un volume supérieur d'un volume inférieur et elle est placée de façon que seul ce dernier contienne de l'ergol à la fin du fonctionnement du moteur d'apogée. Une variation de température peut faire passer un faible volume d'ergol du réservoir inférieur vers le réservoir supérieur, avant que les températures ne s'équilibrent. Le rôle du dispositif tampon est de retenir l'ergol sortant du volume inférieur, puis de le restituer à ce volume. Cette disposition permet de n'équiper d'un dispositif capillaire que le volume inférieur.

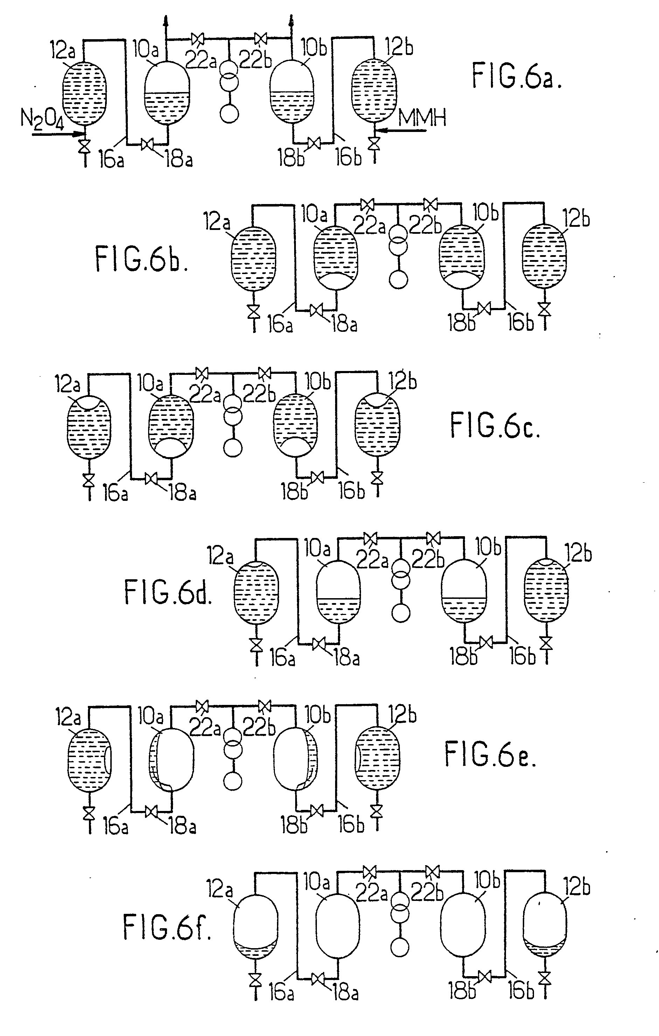

Le dispositif tampon peut être constitué par des ailettes métalliques en éventail 40 entourant le trou ménagé dans la cloison de séparation 42 (figure 4). Il peut aussi bien être constitué par une bande métallique 44 enroulée en spirale, dont les spires se resserrent progressivement vers le centre où se place le trou de traversée de la cloison 42 (figure 5).

Un procédé de mise en œuvre du dispositif de propulsion suivant l'invention sera maintenant décrit en faisant référence aux figures 6a à 6f.

Les réservoirs sont tout d'abord purgés, puis remplis au sol suivant le trajet indiqué par les flèches en figure 6a, la partie haute des réservoirs 12a et 12b étant mise à la décharge. Ce remplissage, effectué alors que les vannes 22a et 22b sont fermées, est arrêté lorsque l'espace occupé par le gaz dans les réservoirs amont 10a et 10b est celui préalablement calculé pour permettre de tolérer les dilatations thermiques différentielles de l'ergol et de la paroi du réservoir sans risque de rupture ou de déformation de ce dernier.

En cas de lancement par fusée, les ergols restent plaqués dans la même direction lors du tir et lors du passage sur orbite de transfert, du fait de l'existence d'une accélération axiale. Les ergols ne peuvent balloter dans les réservoirs aval 12a et 12b. Le ballotement dans les réservoirs amont au cours du lancement, puis des transferts et de la circulation libre sur orbite de transfert (où aucune accélération ne s'exerce) jusqu'au fonctionnement du moteur d'apogée peut être réduit en prévoyant un système de cloisons ou de chicanes dans les réservoirs. Ces chicanes sont placées pour séparer une zone qui reste entièrement remplie d'ergol, quelle que soit la température, d'une zone contenant du gaz et une fraction de l'ergol aussi faible que possible, mais noyant le débouché de la communication avec la première zone, quelle que soit la température.

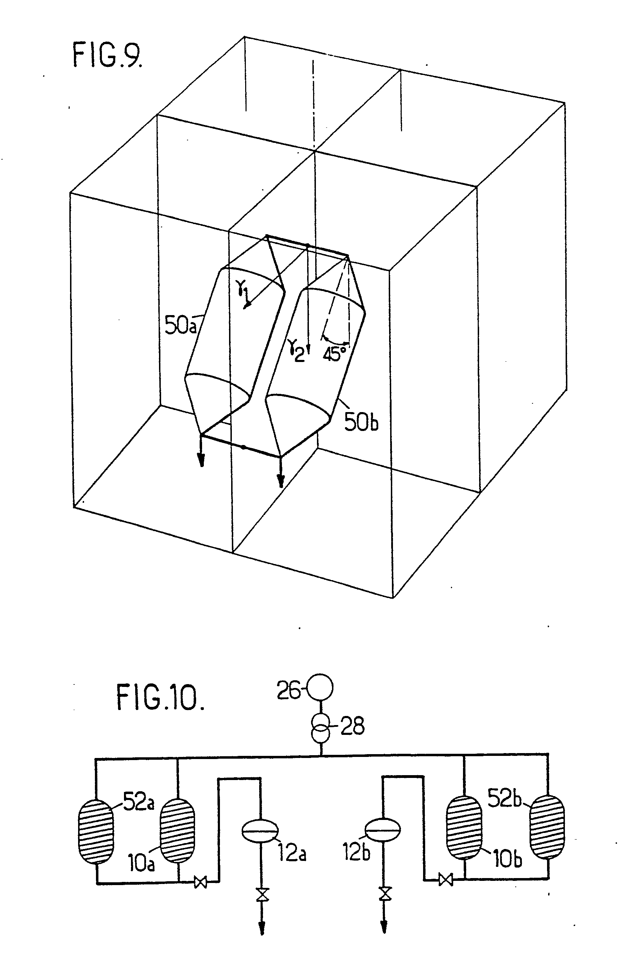

Dans le cas d'un lancement par fusée, avec stabilisation ultérieure suivant trois axes ou par rotation, on peut utiliser la disposition montrée en figure 7. La cloison 46, oblique, est placée de façon que le niveau $N_1$ de l'ergol à la température minimum reste suffisant pour noyer le débouché d'un tube de communication ascendant 48. Le volume de la zone située au-dessus de la cloison 46 est tel que, lorsque l'ergol atteint le niveau $N_2$, à la température maximale, la pression dans le réservoir 10a reste acceptable. Dans la pratique, ce résultat sera atteint en donnant au compartiment situé au-dessus de la cloison 46, un volume de l'ordre de 4 % de celui de l'autre.

Dans le cas d'un satellite lancé par fusée, l'absence d'accélération lors de la circulation libre sur orbite de transfert fait que les ergols peuvent prendre n'importe quelle position dans les réservoirs amont, la pire situation pour l'allumage ultérieur du moteur d'apogée étant celle montrée en figure 6b où les conduites 16a et 16b débouchent dans l'atmosphère d'hélium des réservoirs 10a et 10b. Cette situation n'empêche pourtant pas l'allumage du moteur d'apogée. Elle provoque simplement le passage d'une faible quantité d'hélium de pressurisation dans les réservoirs aval 12a et 12b lors de l'ouverture des vannes d'alimentation du moteur d'apogée. Au cours de la phase initiale de l'injection, l'hélium qui est passé dans les réservoirs aval, chasse les ergols qu'ils contiennent vers le moteur d'apogée (figure 6c). Puis l'accélération, axiale dans le cas d'un moteur stabilisé suivant trois axes (figure 6d), radiale dans le cas d'un satellite stabilisé par rotation (figure 6e), vide progressivement les réservoirs amont 10a et 10b. Dans le cas d'un satellite stabilisé par rotation, la vidange complète peut être obtenue en utilisant la disposition montrée en figure 3. Il faut remarquer au passage que la disposition autorise la vidange complète, même dans le cas d'un angle de nutation important, pouvant même atteindre 90° (situation fréquemment dénommée « spin à plat »).

Une fois vidés les réservoirs amont 10a et 10b, les réservoirs aval 12a et 12b se vident progressivement à leur tour pour alimenter le moteur d'apogée. Pendant ce fonctionnement, les vannes 22a et 22b restent ouvertes pour que la pressurisation soit assurée par les bouteilles d'hélium 26 à travers le détenteur 28. Jusqu'à l'issue du fonctionnement du moteur d'apogée 14, les vannes 18a et 18b restent ouvertes, les reflux d'hélium étant interdits par les dispositifs anti-retour placés sur les conduites 16a et 16b et par le débit d'hélium. Comme on l'a indiqué plus haut, le dispositif anti-retour sera généralement basé sur les forces de capilarité et constitué par exemple par une toile métallique ayant une maille de l'ordre de 10 $\mu$ qui interdit aux gaz de passer lorsque la toile est mouillée par l'ergol et que la différence de pression est inférieure à une valeur de l'ordre de 100 mbars. Après arrêt du moteur d'apogée, les vannes pyrotechniques 18a et 18b sont fermées et séparent définitivement les réservoirs. A partir de ce moment, les réservoirs 12a et 12b fonctionnent en dépressurisation progressive depuis la valeur initiale, généralement de 18 bars. Les vannes 22a et 22b sont fermées et on dépressurise généralement les réservoirs 10a et 10b par ouverture d'une vanne d'évacuation de l'hélium résiduel, de façon symétrique pour ne pas modifier l'attitude du satellite (Fig. 6f).

Ultérieurement, l'ergol résiduel contenu dans les réservoirs 12a et 12b, sera utilisé pour alimenter les tuyères d'orientation et de remise à poste.

Le montage indiqué en figure 7 n'est pas approprié au cas d'un lancement par navette spatiale. On sait en effet que, dans ce cas, la séparation du satellite muni du moteur de périgée et de la navette s'effectue par largage vers l'arrière, ce qui conduit le satellite à prendre une orbite plus basse que la navette. Le moteur de périgée est ensuite allumé lorsque le satellite se trouve dans le plan équatorial terrestre. L'accélération due au lancement à partir de la navette est alors orientée à 90° de l'accélération due à l'action des moteurs de périgée et d'apogée.

Les figures 8 et 9 montrent une disposition qui est utilisable quel que soit le mode de lancement, par satellite ou par navette, et le mode de stabilisation ultérieure. Le dispositif comporte alors, en plus des réservoirs 10a-10b et 12a-12b, deux capacités supplémentaires 50a et 50b dont le volume doit répondre aux mêmes critères que celui du compartiment supérieur constituant vase d'expansion dans le cas de la figure 7. Ces capacités sont de révolution, d'axe à 45° environ des directions $\gamma_1$ et $\gamma_2$ des accélérations lors du lancement par navette et par fusée et lors du fonctionnement du moteur d'apogée. Les parties terminales au moins sont coniques, avec un demi-angle au sommet inférieur à 45°, égal par exemple à 30°, afin que l'emplacement de la sortie corresponde toujours à un point bas.

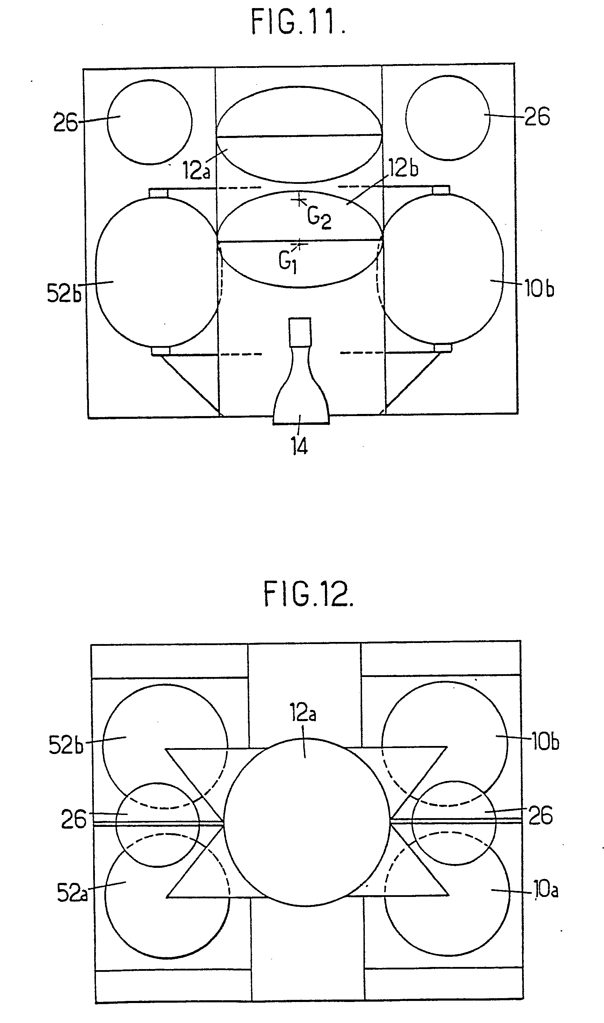

Les figures 10, 11 et 12 montrent schématiquement un dispositif à deux ergols et six réservoirs qui permet d'éviter tout décentrement du centre de masse par rapport à l'axe de spin. Sur le schéma de la figure 10, on voit que les volumes de stockage de chaque ergol comportent, en plus du réservoir à tension de surface 12a ou 12b et du réservoir bobiné 10a ou 10b, un réservoir bobiné supplémentaire 52a ou 52b, de même volume et de même forme que le premier. L'implantation des réservoirs peut être celle indiquée sur les figures 11 et 12, respectivement en élévation et en vue de dessus. Les réservoirs 10 et 52 contenant un même ergol alimentent en parallèle le réservoir 12 correspondant et se vident simultanément pendant le fonctionnement du moteur d'apogée. Dans un mode d'exécution représentatif d'un dispositif de lancement de satellite existant, les réservoirs 10 et 52 peuvent avoir chacun une contenance de 130 l et être alimentés en hélium sous une pression de 18 bars. Si on utilise des réservoirs 12a et 12b ayant une contenance supérieure, par exemple de 160 l, il faut, pour les faire travailler en dépressurisation progressive lors du fonctionnement des tuyères 37, partir d'une pression d'hélium supérieure à 18 bars. Ce résultat peut être atteint en utilisant deux détendeurs 28 ou un détendeur à deux niveaux, permettant, une fois les réservoirs 10 et 52 vidés, d'amener la pression dans les réservoirs 12 à 22 bars avant fermeture des vannes 18.

Dans ces conditions, le centre de masse du dispositif de propulsion évolue pratiquement de la position $G_1$ lorsque le satellite est sur orbite de transfert avant allumage du moteur d'apogée, à la position $G_2$ lors de la venue à poste sur orbite géostationnaire (Figure 11).

## Revendications

1. Dispositif de propulsion unifié à ergol pour satellite comportant un système de stockage d'ergol ayant au moins deux réservoirs (10a, 12a) pour l'ergol ou chaque ergol, caractérisé en ce que les réservoirs (10a, 12a) contenant le même ergol sont montés en série, la contenance du réservoir amont (10a) étant inférieure à la consommation de combustible requise par le moteur d'apogée (14) pour l'injection et ce réservoir amont étant monté de façon que l'accélération au cours de l'injection maintienne l'ergol qu'il contient au contact d'une zone de la paroi munie d'une conduite (16a) de sortie d'ergol vers le réservoir placé en aval.

2. Dispositif de propulsion selon la revendication 1, caractérisé en ce que le réservoir amont a une constitution telle qu'il ne soit compatible qu'à court terme avec l'ergol qu'il contient.

3. Dispositif selon la revendication 2, caractérisé en ce que le réservoir amont (10a) comporte une paroi métallique mince frettée par un bobinage de fibres enrobées de plastique.

4. Dispositif selon l'une quelconque des revendications précédentes, caractérisé en ce que le réservoir amont (10a), comporte une cloison oblique (46) placée de façon que, avant toute consommation d'ergol, le niveau de l'ergol à la température minimale reste suffisant pour noyer le débouché d'un tube ascendant (48) de communication traversant la cloison.

5. Dispositif de propulsion selon la revendication 1, 2 ou 3, caractérisé en ce qu'il comporte une capacité supplémentaire (50a) placée en amont des réservoirs, de révolution autour d'un axe placé à 45° des deux directions perpendiculaires suivant lesquelles sont susceptibles de s'exercer les accélérations lors de la mission, présentant dans ses parties terminales au moins une forme conique avec un angle au sommet inférieur à 45°.

6. Dispositif de propulsion selon l'une quelconque des revendications précédentes, caractérisé en ce que le réservoir aval (12a) est séparé en deux volumes par une cloison oblique (42) munie d'un passage situé au point bas de la cloison et comportant un dispositif tampon à capilarité, l'emplacement de ladite cloison étant choisi pour que seul le compartiment relié à la sortie du réservoir contienne de l'ergol lorsque le satellite est à poste.

7. Dispositif de propulsion selon l'une quelconque des revendications précédentes, à au moins deux ergols, caractérisé en ce que les réservoirs (10a, 10b; 12a, 12b) sont placés pour ne pas modifier le centrage autour de l'axe principal du satellite au fur et à mesure de la consommation d'ergol.

8. Procédé de propulsion de satellite par alimentation d'un propulseur d'apogée (14) et de tuyères (37) de maintien à poste à partir d'un système de stockage d'ergol comprenant au moins deux réservoirs (10a, 12a) pour l'ergol ou pour chaque ergol, caractérisé en ce qu'on monte en série les réservoirs (10a, 12a) contenant un ergol, en ce qu'on alimente le propulseur d'apogée (14) à partir des réservoirs placés en série en admettant un gaz de pressurisation dans le réservoir amont (10a) à partir d'une source de gaz embarqué (26, 28) et en ce qu'on alimente les tuyères (37) de maintien à poste à partir du seul réservoir aval après que le réservoir amont ait été vidé par fonctionnement du moteur d'apogée et après séparation définitive des réservoirs amont et aval, avantageusement à l'aide d'une vanne pyrotechnique (18a).

9. Procédé selon la revendication 8, caractérisé en ce qu'on alimente les réservoirs sous pression constante de gaz pendant le fonctionnement du moteur d'apogée et en ce qu'on alimente les tuyères de maintien à poste à partir du réservoir aval fonctionnant en dépressurisation progressive après vidage complet du réservoir amont.

## Claims

1. Unitary ergol propulsion device for a satellite, comprising an ergol storage system having at least two tanks (10a, 12a) for the ergol or each ergol, characterized in that those tanks (10a, 12a) which contain the same ergol are connected in series relation, the capacity of the upstream tank (10a) being lower than the fuel consumption required by the apogee boost motor (14) for injection and said upstream tank being so arranged that the acceleration during injection maintains the contained ergol in contact with a zone of the wall which is provided with an ergol outlet line (16a) to the downstream tank.

2. Propulsion device according to claim 1, characterized in that the upstream tank has such a construction that it has a short time compatibility only with the contained ergol.

3. Device according to claim 2, characterized in that the upstream tank (10a) has a low thickness metal wall hooped by a plastic material impregnated fibers winding.

4. Device according to any one of the preceding claims, characterized in that the upstream tank (10a) has a slanted partition (46) so located that, before any ergol consumption, the ergol free level at the minimum temperature remains sufficiently high for maintaining in immersed condition the mouth of an upwardly directed communication tube (48) projecting through the partition.

5. Propulsion device according to claim 1, 2 or 3, characterized in that it comprises an additional capacity (50a) placed upstream of the tanks, having a rotational symmetry about an axis located at an angle of 45° from the two perpendicular directions along which accelerations are prone to occur during the flight, having a conical shape with an apex angle lower than 45° in the end portions at least.

6. Propulsion device according to any one of the preceding claims, characterized in that the downstream tank (12a) is separated into two volumes by a slanted partition (42) having a passage located at the lower point of the wall and comprising a capillary buffer device, the location of said partition being so selected for only the compartment which is connected to the outlet of the tank contains ergol when the satellite is at its final location.

7. Propulsion device according to any one of the preceding claims, using two ergols at least, characterized in that the tanks (10a, 10b, 12a, 12b) are so located as not to modify the position of the center of gravity about the main axis of the satellite as ergol is spent.

8. A process for propulsion of a satellite by feeding an apogee boost motor (14) and nozzles for retaining the satellite at a working location from an ergol storage system comprising at least two tanks (10a, 12a) for the ergol or each ergol, characterized in that the tanks (10a, 12a) containing an ergol are connected in series relation, the apogee boost motor (14) is fed from the serially located tanks by admitting pressurization gas into the upstream tank (10a) from an inboard gas source (26, 28) and the nozzles (37) for retaining the satellite at the working location are fed from the downstream tank only after the upstream tank has been depleted due to operation of the apogee boost motor and after the upstream and downstream tanks have been finally separated, preferably through the action of a pyrotechnical valve (18a).

9. Process according to claim 8, characterized in that the tanks are fed under a constant gas pressure during operation of the apogee boost motor and the nozzles for adjustment in position are fed from the downstream tank operating with progressive depressurization after complete depletion of the upstream tank.

## Patentansprüche

1. Vereinheitlichte, mit Ergol arbeitende Antriebsvorrichtung für Raumfahrzeuge, mit einem System zur Ergolspeicherung, das zumindest zwei Behälter (10a, 12a) für das Ergol bzw. jedes Ergol aufweist, dadurch gekennzeichnet, dass die dasselbe Ergol enthaltenden Behälter (10a, 12a) in Serie montiert sind, wobei das Fassungsvermögen des stromaufwärtigen Behälters (10a) geringer ist als der von dem Steigmotor (14) zur Positionierung auf der Umlaufbahn angeforderte Brennstoffverbrauch und wobei dieser stromaufwärtige Behälter derart montiert ist, dass die Beschleunigung während der Positionierung das Ergol, das er enthält, in Kontakt mit einer Wandzone hält, die eine Ergolausgangsleitung (16a) zum stromabwärts angeordneten Behälter aufweist.

2. Antriebsvorrichtung nach Anspruch 1, dadurch gekennzeichnet, dass der stromaufwärtige Behälter derart beschaffen ist, dass er nur für einen kurzen Zeitraum mit dem Ergol, das er enthält, verträglich ist.

3. Vorrichtung nach Anspruch 2, dadurch gekennzeichnet, dass der stromaufwärtige Behälter (10a) eine metallische, dünne Wand aufweist, die mit einer Wicklung aus mit Kunststoff umhüllten Faser bewehrt ist.

4. Vorrichtung nach einem der vorangehenden Ansprüche, dadurch gekennzeichnet, dass der stromaufwärtige Behälter (10a) eine schräge Zwischenwand (46) umfasst, die derart angeordnet ist, dass vor einem Ergolverbrauch das Niveau des Ergols bei der minimalen Temperatur ausreichend bleibt, um die Mündung eines aufsteigenden Verbindungsrohres (48), das die Zwischenwand durchsetzt, zu überfluten.

5. Antriebsvorrichtung nach Anspruch 1, 2 oder 3, dadurch gekennzeichnet, dass sie eine zusätzliche Kapazität (50a) umfasst, die stromaufwärts der Behälter angeordnet ist, drehbar um eine Achse, die in 45° zu den beiden senkrechten Richtungen angeordnet ist, entsprechend welcher die Beschleunigungen bei der Mission stattfinden können, wobei sie in ihren Endbereichen zumindest eine konische Form mit einem Winkel in der Spitze von weniger als 45° aufweist.

6. Antriebsvorrichtung nach einem der vorangehenden Ansprüche, dadurch gekennzeichnet, dass der stromabwärtige Behälter (12a) durch eine schräge Zwischenwand (42), die mit einem Durchgang versehen ist, der im tiefsten Punkt der Zwischenwand angeordnet ist und die eine Stopfenvorrichtung mit Kapilarwirkung aufweist, in zwei Volumen geteilt ist, wobei die Lage der Zwischenwand ausgewählt ist, damit allein das mit dem Ausgang des Behälters verbundene Abteil Ergol enthält, wenn der Satellit in Stellung ist.

7. Antriebsvorrichtung nach einem der vorangehenden Ansprüche, mit zumindest zwei Ergolen, dadurch gekennzeichnet, dass die Behälter (10a, 10b, 12a, 12b) derart angeordnet sind, dass sie die Trimmung um die Hauptachse des Satelliten bei voranschreitendem Ergolverbrauch nicht verändern.

8. Verfahren zum Antrieb von Satelliten durch Speisung eines Steigtriebwerkes (14) und Positionshaltedüsen (37) ausgehend von einem System zur Ergolspeicherung, das zumindest zwei Behälter (10a, 12a) für das Ergol oder für jedes Ergol umfasst, dadurch gekennzeichnet, dass man die ein Ergol enthaltenden Behälter (10a, 12a) in Serie montiert, dass man das Steigtriebwerk (14) von den in Serie angeordneten Behältern aus versorgt, indem man von einer an Bord genommenen Gasquelle (26, 28) aus ein Druckausgleichgas in den stromaufwärtigen Behälter (10a) einlässt und dadurch, dass man die Düsen (37) zur Stellungshaltung nur von dem stromabwärtigen Behälter aus versorgt, nachdem der stromaufwärtige Behälter durch den Betrieb des Steigmotors geleert worden ist und nachdem der stromaufwärtige und der stromabwärtige Behälter endgültig von einander zweckmässig mit Hilfe eines pyrotechnischen Schiebers (18a) getrennt worden sind.

9. Verfahren nach Anspruch 8, dadurch gekennzeichnet, dass man die Behälter unter einem konstanten Druck während des Betriebs des Steigmotors mit Gas versorgt und dadurch, dass man die Düsen zur Stellungshaltung von dem stromabwärtigen Behälter aus versorgt, der nach vollständiger Leerung des stromaufwärtigen Behälters unter progressivem Druckabfall arbeitet.

FIG.1.

FIG.2.

# FIG.3.

# FIG.4.

# FIG.5.

# FIG.7.

# FIG.8.

FIG.6a.

FIG.6b.

FIG.6c.

FIG.6d.

FIG.6e.

FIG.6f.

3

FIG.9.

FIG.10.

# FIG.11.

# FIG.12.